# EUROPEAN PATENT APPLICATION

(11) **EP 1 683 566 A1**
(43) Date of publication of application: **26.07.2006**
(21) Application number: 04788223.8
(22) Date of filing: 28.09.2004
(51) Int. Cl.: B01D 63/00, B01D 63/08

(54) **POROUS FILM CARTRIDGE**

(30) Priority: 17.10.2003 JP 2003358256
(71) Applicant: FUJI PHOTO FILM CO., LTD., Minamiashigara-shi, Kanagawa-ken 250-0193 (JP)
(72) Inventor: SHIGESADA, Keiji, c/o Fuji Photo Film Co., Ltd., Odawara-shi, Kanagawa 2500001 (JP); FUJIWARA, Morio, c/o Fuji Photo Film Co., Ltd., Odawara-shi, Kanagawa 2500001 (JP)
(74) Representative: Grünecker, Kinkeldey, Stockmair & Schwanhäusser Anwaltssozietät
(86) International application number: PCT/JP2004/014156
(87) International publication number: WO 2005/037413

(57) **Abstract**

A porous membrane cartridge of the present invention is configured to comprises a cylindrical barrel having openings at a top end and a rear end, respectively; a cap formed into a cylindrical shape having a fit-in portion fitted outside the top end, abutting with an opening edge of the top end, and having a sandwiching face for sandwiching a porous membrane between itself and the barrel; and the porous membrane sandwiched between the opening edge of the barrel and the cap, wherein the cap is fixed to the barrel so as not to be pulled out of the barrel in a state of crushing a peripheral edge of the porous membrane and sandwiching the porous membrane between itself and the cap.

## Description

### TECHNICAL FIELD

The present invention relates to a porous membrane cartridge used for a filtration of a liquid and the like.

### BACKGROUND ART

A porous membrane is widely used in a laboratory and a factory for a filtration of a liquid and an adsorption of a specific substance in the liquid. Then in using the porous membrane for such a purpose, it is requested to hold the porous membrane on the way of a passage where the liquid passes. As the holding method is generally used a method of holding the porous membrane with sandwiching it between two members having a passage where the liquid passes.

Because such a porous membrane is generally used in a precise experiment and measurement, a purified one is requested and is usually changed if once used. Therefore, it is convenient in points of a purification and an expedience in use to make a porous membrane a cartridge holding the porous membrane in a state of being able to pass a liquid therethrough. As such a porous membrane is known, for example, such a nucleic acid refining unit described in Japanese Patent Laid-Open Publication No. 2002-345465.

### DISCLOSURE OF THE INVENTION

However, in a conventional porous membrane there is a fear that a liquid to pass the porous membrane goes around a side thereof. Particularly, in a case that two components for sandwiching the porous membrane are fixed only by fastening with fit-in, a size changes according to an expansion by a temperature change and swelling by a humidity change, and a sandwiched state changes in some case. In addition, in a case of using the conventional porous membrane in refining a nucleic acid, although the nucleic acid is adsorbed to the porous membrane, then is adsorbed to the porous membrane, and making a specific liquid flow, the nucleic acid is desorbed; however, if unable to make the liquid for desorption sufficiently flow also in corner portions of the porous membrane, there is a problem that: the nucleic acid remains in the corners and a recovery efficiency of the nucleic acid worsens. In view of such a problem, the present invention is made, and a purpose thereof is to provide a porous membrane cartridge for preventing a liquid from going around a side portion thereof.

In order to solve the problem, a porous membrane cartridge of the present invention is configured as follows: Namely, the porous membrane cartridge comprises a cylindrical barrel having openings at a top end and a rear end, respectively; a cap formed into a cylindrical shape having a fit-in portion fitted outside the top end, abutting with an opening edge of the top end, and having a sandwiching face for sandwiching a porous membrane between itself and the barrel; and the porous membrane sandwiched between the opening edge of the barrel and the cap, wherein the cap is fixed to the barrel so as not to be pulled out of the barrel in a state of crushing a peripheral edge of the porous membrane and sandwiching the porous membrane between itself and the cap.

In accordance with such a porous membrane cartridge, an opening edge of a barrel and a sandwiching face of a cap are sandwiched in a state of a peripheral edge of the porous membrane being crushed. In other words, if because the porous membrane has a porosity, it is strongly sandwiched by the sandwiching face between the opening edge of the barrel and the sandwiching face of the cap, the porosity is crushed as if occluded, and a liquid results in not flowing therefrom. Then because in the porous membrane cartridge the cap is fixed to the barrel in this state, the liquid does not go around a side portion of the porous membrane. Accordingly, when using the porous membrane cartridge in filtration and adsorption, it is enabled to prevent a discharged liquid from being contaminated by a liquid going around the side portion of the porous membrane.

As a method of fixing the cap to the barrel can be used any one of a fit-in, adhesion, ultrasonic welding, laser welding, insert molding, and the like. To be more precise, it is preferable that the opening edge of the barrel and the sandwiching face of the cap are welded by ultrasound.

Then, in addition that the opening edge of the barrel is formed to a taper where an inner perimeter side is more retreated than an outer perimeter side, it is preferable that the opening edge of the barrel is welded to the sandwiching face of the cap by ultrasound. Thus because in addition to crushing a peripheral edge of the porous membrane by a portion of an outer perimeter side, welding can be performed by the portion of the outer perimeter and a sandwiching force of the porous membrane gradually becomes smaller as the porous membrane draws apart from the welded portion (namely, the portion of the outer perimeter), it is enabled to avoid a stress on the porous membrane from concentrating and to prevent a breakage thereof from occurring. At this time, because if the taper is continuously formed into a flat portion formed at an outmost perimeter of the opening edge, it sandwiches the porous membrane by a clear welded portion (energy director), it is enabled to reduce an unnecessary positional displacement of the porous membrane.

In this case, in addition to sandwiching and crushing the porous membrane between the outer perimeter side of the opening edge and the sandwiching face, it is preferable that a portion of the outer perimeter side and that of the sandwiching face are welded therebetween by ultrasound as it is.

In addition, a porous membrane cartridge may also be configured by: circularly forming a bead portion as a welded portion (energy director), additionally the porous membrane is sandwiched and crushed with the bead portion, and the cap and the barrel are welded by ultrasound.

In addition, any one of the adhesion portion and welded portion of the barrel and the cap is not limited to the opening edge and the sandwiching face. For example, the barrel may also have a joint portion for abutting with an opening edge of a fit-in portion of the cap on own outer perimeter face, make the cap and the barrel adhere or be welded between the opening edge and the joint portion, and thereby configure a porous membrane cartridge. Thus, if sandwiching a porous membrane and jointing a barrel and a cap at separate portions, it does not occur to damage the porous membrane even in a case of using an especially delicate porous membrane.

Furthermore, in a case of fixing the cap by fitting in the barrel, it is enabled to fix the cap to the barrel by an engagement between any one of a depression and a protrusion formed on an outer perimeter face of the barrel and any one of those formed on an inner perimeter face of the cap. At this time, not to mention an engagement between the depression on the outer perimeter face of the barrel and the protrusion on the inner perimeter face of the cap and an engagement between the protrusion on the outer perimeter face of the barrel and the depression on the inner perimeter face of the cap, the protrusion on the outer perimeter face of the barrel and the protrusion on the inner perimeter face of the cap may be engaged.

In addition, not limiting to the portions described above, it is also enabled to fix the cap and the barrel by any one of an adhesive and laser welding on a fit-in face where the outer perimeter face of the barrel and the inner perimeter face of the cap oppose each other.

In addition, in a case of performing molding by insert molding, it is preferable to place a cap molded in advance and a porous membrane disposed in the cap within a cavity of an injection molding mold, to inject a molding material in the cavity, to thereby mold the barrel, and to simultaneously sandwich a porous membrane with the opening edge of the barrel and the sandwiching face of the cap. Thus it is enabled to realize a sandwich and fixation of the porous membrane. In addition, in a case of making a porous membrane cartridge unit where a plurality of porous membrane cartridges are connected, it is enabled to align a sandwiching force of porous membranes of the plurality of the porous membrane cartridges, and while simultaneously forming a plurality of barrels, to make up a state of these barrels being stably connected.

In accordance with a porous membrane cartridge of the present invention thus described, it is enabled to prevent a liquid from going around a side portion of the porous membrane.

### BRIEF DESCRIPTION OF DRAWINGS

FIG. 1 is an exploded perspective view of a porous membrane cartridge related to a first embodiment of the present invention.
FIG. 2 is a section view of a porous membrane cartridge related to the first embodiment.
FIG. 3 is an enlarged section perspective view of a cap related to the first embodiment.
FIG. 4 is an enlarged view of a part A in FIG. 2, and shows a state before a barrel 10 and a cap 20 are welded.
FIG. 5 is drawings showing a process of assembling a porous membrane cartridge related to the first embodiment; (a) shows a state before welding; (b) shows a state of starting to crush a porous membrane F; (c) shows a state on the way of the welding; and (d) shows a state after the welding.
FIG. 6 is section views showing a porous membrane cartridge 1A related to a second embodiment of the present invention and corresponding to the enlarged view of the part A in FIG. 2; (a) shows a state before welding; (b) shows a state on the way of the welding; and (c) shows a state after the welding.
FIG. 7 is a section view showing another example of the porous membrane cartridge 1A related to the second embodiment and corresponding to the enlarged view of the part A in FIG. 2.
FIG. 8 is drawings showing a porous membrane cartridge 1D related to a third embodiment of the present invention and corresponding to the enlarged view of the part A in FIG. 2; (a) shows a state before welding; and (b) shows a state after the welding.
FIG. 9 (a) is another example of the porous membrane cartridge 1D of the third embodiment; and FIG. 9 (b) shows still another example.

### BEST MODE(S) FOR CARRYING OUT THE INVENTION

### [First Embodiment]

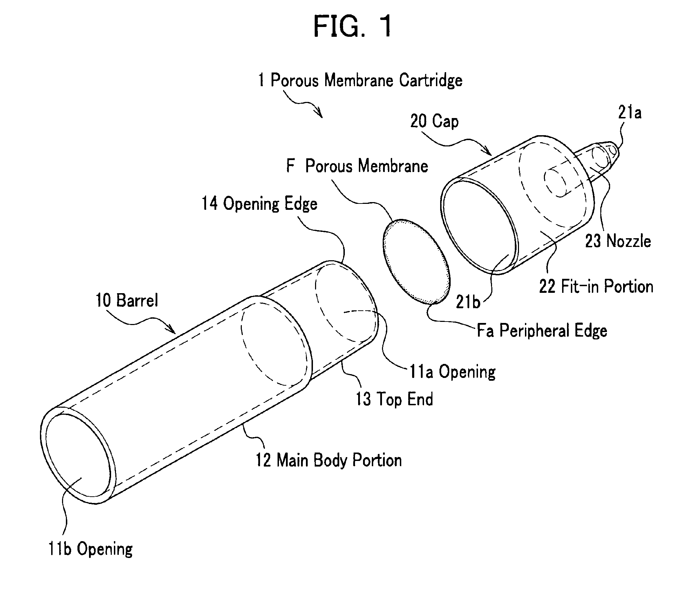

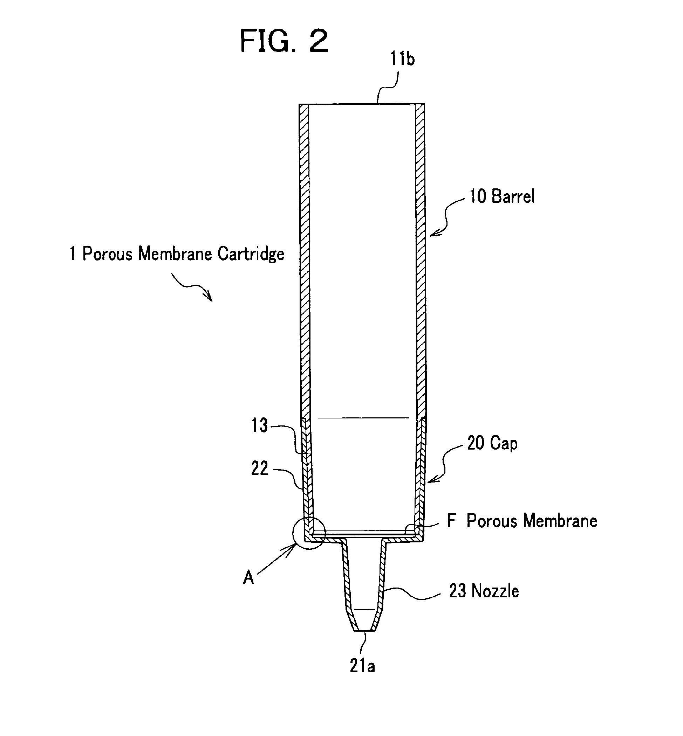

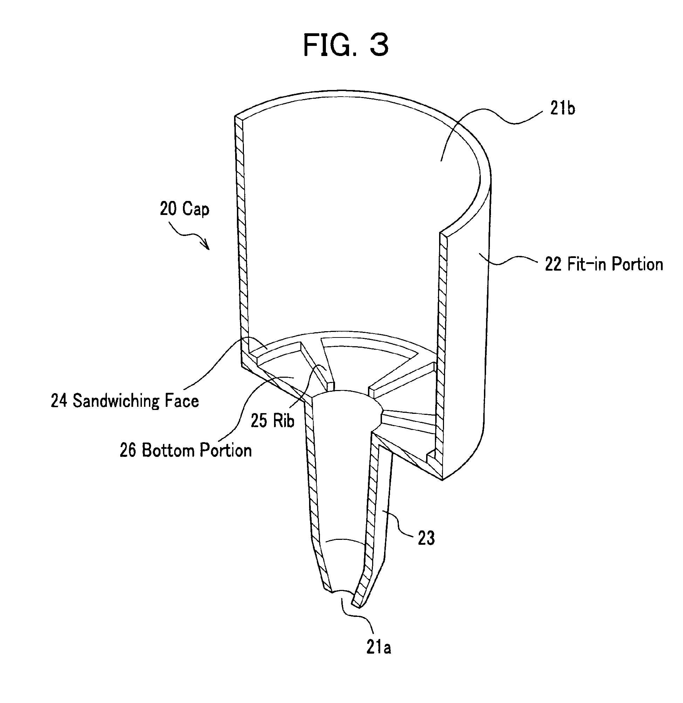

Next will be described an embodiment of the present invention, referring to drawings as needed. FIG. 1 is an exploded perspective view of a porous membrane cartridge related to a first embodiment of the present invention; FIG. 2 is a section view of a porous membrane cartridge related to the first embodiment; and FIG. 3 is an enlarged section perspective view of a cap related to the first embodiment.

Meanwhile, although in the embodiment is described a case of using a porous membrane cartridge in a nucleic acid as an application thereof, the application is not limited thereto.

As shown in FIG. 1, a porous membrane cartridge 1 related to the first embodiment is configured of a porous membrane F, and a barrel 10 and a cap 20 for holding the porous membrane F and forming a passage where a liquid passes.

The barrel 10 comprises a cylindrical main body portion 12 and a cylindrical top end 13 continuing into the main body portion 12, and has an opening 11a at the top end 13 and an opening 11b at a rear end of the main body portion 12. Therefore, a liquid is enabled to pass from the opening 11b to the opening 11a. An outer diameter of the top end 13 is designed to be one size smaller that of the main body portion 12. Meanwhile, in the embodiment a side of the barrel 10 and the cap 20 in which a liquid flows is called a rear end, and a side from which the liquid is pushed out is called a top end.

The cap 20 comprises a cylindrical fit-in portion 22 and a nozzle 23 continuing into a top side of the fit-in portion 22.

An opening 21a is formed at the top end of the nozzle 23, an opening 21b is formed at the rear end of the fit-in portion 22, and thus a liquid is enabled to pass from the rear end to top end of the cap 20.

An inner diameter of the fit-in portion 22 is formed into a diameter enabled to fit in the diameter of the top end 13 of the barrel 10.

Then as shown in FIG. 2, by fitting the top end 13 of the barrel 10 in the fit-in portion 22 of the cap 20 in a state of putting in the porous membrane F into the portion 22 of the cap 20, it is enabled to sandwich the porous membrane F between the cap 20 and the barrel 10.

As shown in FIG. 3, in the cap 20 are formed six radial ribs 25 (only three are shown in FIG. 3) at a bottom portion 26 of the fit-in portion 22 continuing into the nozzle 23 from the portion 22. In addition, at an outer perimeter edge of the bottom portion 26, across a whole perimeter thereof is formed a sandwiching face 24 made higher by one step from the bottom portion 26 so as to be a same height as an upper face of the ribs 25.

The sandwiching face 24 is a face for sandwiching the porous membrane F between itself and an opening edge 14 (see FIG. 1) corresponding to an end edge of the opening 11a of the barrel 10.

The ribs 25 are formed at the same height as the sandwiching face 24, thereby support the porous membrane F disposed at the bottom portion 26 within the cap 20, and prevent the porous membrane F from elongating and breaking by a liquid flowing into the top end (opening 21a) from the rear end (opening 21b). In addition, the ribs 25 are radially formed, and thereby, it is designed that a liquid smoothly flows in the nozzle 23 in being made to flow from the rear end to the top end.

Meanwhile, although the barrel 10 and the cap 20 are composed of polystyrene, they are not limited thereto. In a case of fixing the barrel 10 and the cap 20 by ultrasonic welding, a thermoplastic resin is available that can be welded by ultrasound. In addition, in a case of fixing the barrel 10 and the cap 20 by adhesive, a material is available that can be made to adhere by adhesive.

The porous membrane F is composed of an organic polymer and is formed into a circle of which a diameter approximately matches the inner diameter of the cap 20 and the outer diameter of the top end 13 of the barrel 10. As a material of the porous membrane F, for example, a surface-saponified substance of acetylcellulose is suitable. As acetylcellulose, although any one of mono acetylcellulose, diacetylcellulose, and triacetylcellulose is available, specifically triacetylcellulose is preferable.

Meanwhile, as a general filter can also be used a porous membrane of such PTFE (polytetrafluoroethylene), polyamide, polypropylene, and polycarbonate.

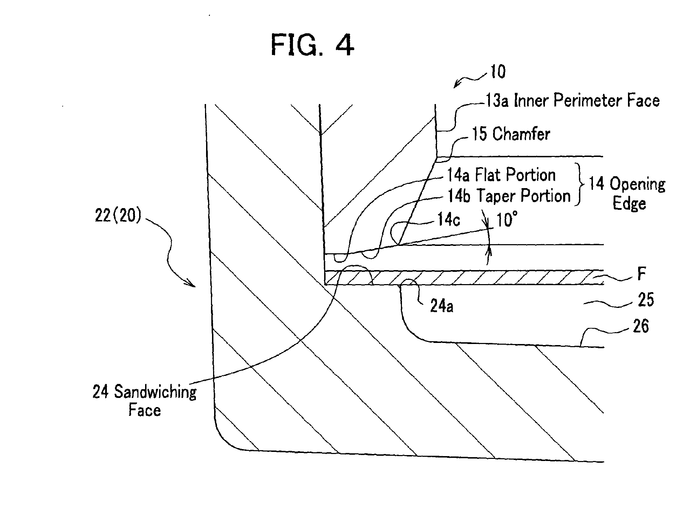

FIG. 4 is an enlarged view of a part A in FIG. 2.

As shown in FIG. 4, in the opening edge 14 of the barrel 10, a slight portion (for example, a degree of 0.1 mm width) from an outmost perimeter is formed as a flat portion 14a perpendicular to an axial line (longitudinal direction) of the barrel 10, and continuing into the flat portion 14a is formed a taper portion 14b that becomes an inside taper that gradually retreats from an outer perimeter toward an inner perimeter thereof. The taper portion 14b makes a small angle of 3 to 20 degrees, for example, 10 degrees with the flat portion 14a. A diameter of an end 14c at an inner perimeter side of the taper portion 14b approximately matches that of an end 24a at an inner perimeter side of the sandwiching face 24, and from the end 14c across the inner perimeter face 13a of the barrel 10, a chamfer 15 is formed that makes an angle of 60 degrees with the flat portion 14a.

In addition, it is preferable to set a longitudinal direction distance of the barrel 10 that retreats from the flat portion 14a to the end 14c so as to be a same degree as a thickness of the porous membrane F and so that the end 14c abuts with a surface of the membrane F after welding the barrel 10 and the cap 20.

Although such an outer diameter of the opening edge 14 of the barrel 10 is decided according to a process liquid amount and a filtration time, in a case of fixing the barrel 10 and the cap 20 by ultrasonic welding, it is preferable to press the flat portion 14a to the porous membrane F and vibrate the portion 14a, and to thereby set a width of the portion 14a to a size suitable for the membrane F melting. For example, in a case that the outer diameter of the opening edge 14 is 7 mm, the width of the flat portion 14a is preferably 0.02 to 1 mm. This is because a filtration effective area decreases if the width of the flat portion 14a is made too wide. Furthermore, considering a manufacturing adequacy such as an energy added to the barrel 10 in welding, the width of the flat portion 14a is preferably 0.02 to 0.5 mm, and more preferably 0.02 to 0.2 mm.

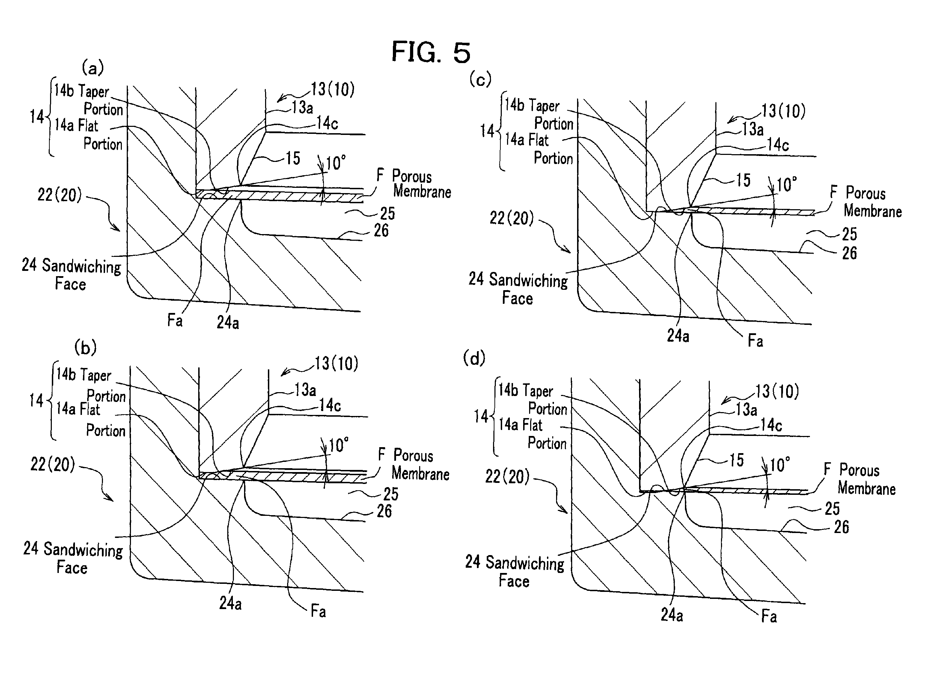

Next will be described an assembling method of the porous membrane F, the barrel 10, and the cap 20 thus described, referring to FIG. 4 and FIG.5 showing an assembling process of the porous membrane cartridge 1.

As shown in FIG. 4, dispose the porous membrane F so as to be put on the bottom portion 26 of the cap 20. At this time, because the sandwiching face 24 and the ribs 25 are designed higher than the bottom portion 26 by one step, the porous membrane F is, to be more precise, put on the sandwiching face 24 and the ribs 25. Then because the diameter of the porous membrane F is approximately same as the inner diameter of the cap 20, as shown in FIG. 5 (a), a peripheral edge Fa of the porous membrane F results in being positioned on the sandwiching face 24.

Then fitting the top end 13 of the barrel 10 inside the fit-in portion 22 of the cap 20, make the opening edge 14 of the barrel 10 abut with the peripheral edge Fa of the porous membrane F. In such a temporal assembly, perform welding by an ultrasonic welder not shown. For example, set the cap 20 on a platform for pressurizing of the ultrasonic welder, apply an ultrasound while pressurizing the barrel 10 toward the cap 20 by horn.

Whereat, by pressing the barrel 10 to the cap 20, an air gap of the porous membrane F is crushed, and then as shown in FIG. 5 (b), the peripheral edge Fa of the outmost perimeter of the porous membrane F is crushed. At this time, because the flat portion 14a provided at the outmost perimeter of the opening edge 14 sandwiches the porous membrane F between itself and the sandwiching face 24, a position of the membrane F is decided, and an unnecessary positional displacement of the membrane F is prevented. Then part of the porous membrane F is further crushed as shown in FIG. 5 (c) while melting, and the opening edge 14 abuts with the sandwiching face 24. Subsequently, a peripheral edge including the flat portion 14a of the opening edge 14 and that of the sandwiching face 24 melt and are welded. As a result, as shown in FIG. 5 (d), the opening edge 14 of the barrel 10 and the sandwiching face 24 of the cap 20 sandwich the porous membrane F, and the membrane F is held in a state of its peripheral edge Fa being crushed. Also the porous membrane F existing between the taper portion 14b of the opening edge 14 and the sandwiching face 24 is also compressed by the taper portion 14b and part of an air gap is crushed. Then the end 14c is in contact with the surface of the porous membrane F. At this time, because the end 14c is formed as a blunt angle by the chamfer 15, it is diflicult to damage the porous membrane F.

The porous membrane cartridge 1 thus made is used as follows:
Firstly, as sample solutions containing nucleic acids, prepare body fluids such as a whole blood, plasma, serum, urine, human waste, semen, and saliva taken as analytes; or solutions adjusted from biotic materials such as a soluble matter and homogenate of a vegetable (or its part), an animal (or its part), and the like. Treat these solutions with a water solution containing a reagent, which solves a cell membrane and solublizes the nucleic acids. Thus the cell membrane and nucleic membrane are solved, and the nucleic acids are dispersed in the water solution. For example, when a sample is a whole blood, red blood cells and various proteins are removed and white blood cells and nucleic membranes are solved by incubation of 10 minutes at 60 degrees Celsius in a state of addition of Guanidine Hydrochloride, Triton-X100, and Protease K (manufactured by SIGMA Corp.).

Adding a water soluble organic solvent, for example, ethanol to a water solution where nucleic acids are thus dispersed, a sample solution is completed. Pass the sample solution while applying a pressure from the opening 11b at the rear end side of the barrel 10 toward the opening 21a of the top of the nozzle 23. Thus the nucleic acids in the sample solution are adsorbed to the porous membrane F.

In a pressurizing system of passing a sample solution by applying the pressure with being compared to a centrifugal separation system that passes the solution by centrifugal force, although the solution attempts to flow toward the peripheral edge Fa of the porous membrane F, because in the portion Fa of the porous membrane F the end portion 14c of the barrel 10 is in contact with the surface of the membrane F, the solution cannot enter a space between the membrane F and the opening edge 14 of the barrel 10. In addition, because in the peripheral edge Fa of the porous membrane F an air gap is crushed by the taper portion 14b and the sandwiching face 24 and furthermore the outer perimeter portion thereof is completely closed by welding of the barrel 10 and the cap 20, it does not occur that a sample solution goes around a side portion (edge of the outer perimeter) of the membrane F. Accordingly, nucleic acids in a sample solution result in being adsorbed only to an inside portion surrounded by the end 14c of the barrel 10 out of the porous membrane F.

Next, pass a nucleic acid washing buffer while applying a pressure from the opening 11b at the rear end side of the porous membrane cartridge 1 toward the opening 21a of the nozzle 23. Although the nucleic acid washing buffer has a composition of desorbing not nucleic acids adsorbed to the porous membrane F but impurities, it is composed of a water solution containing a main agent and a buffer agent, and a surfactant as needed. As the main agent, a solution containing ethanol, Tris, and Triton-X100 is preferable. By this operation, impurities other than nucleic acids are removed from the porous membrane F.

At this time, out of the porous membrane F, because a nucleic acid washing buffer sufficiently passes a portion where the sample solution passed, that is, a portion surrounded by the end 14c, impurities are removed without remaining at the peripheral edge Fa of the membrane F.

Next, passing any one of such refined distilled water and a TE buffer (containing Tris and EDTA (ethylenediamine tetraacetic acid)) while applying a pressure from the opening 11b toward the opening 21a (see FIG. 2), desorb nucleic acids from the porous membrane F, desorb the acids and make them flow out, and recover a solution containing the flowed-out nucleic acids. At this time because same as in adsorbing nucleic acids to the porous membrane F, such refined distilled water sufficiently passes through a portion where the acids surrounded by the end 14c out of the porous membrane F, the acids are sufficiently desorbed without remaining at the peripheral edge Fa of the membrane F.

Thus in the porous membrane cartridge 1 of the embodiment, because when passing such a sample solution where nucleic acids is dispersed, a nucleic acid washing buffer, and refined distilled water, they do not go around a side portion of the porous membrane F, it does not occur that: the acids are discharged without being adsorbed to the membrane F, and impurities mix in a solution where the acids are recovered. In addition, because the end 14c is in contact with the porous membrane F and it does not also occur that the various liquids described above enter a space between the membrane F and the opening edge 14 of the barrel 10, impurities do not mix in a nucleic acid solution after the recovery, and a nucleic acid recovery efficiency is also higher.

In addition, in the porous membrane cartridge 1 of the embodiment, because part of the opening edge 14 is formed so as to be the taper portion 14b where an inner perimeter side is more retreated than an outer perimeter side and a sandwiching force by the opening edge 14 and the sandwiching face 24 gradually becomes smaller from an outer perimeter to an inner perimeter, it is enabled to avoid a concentration of a stress applied to the porous membrane F. In addition, because that the opening edge 14 is designed to be a blunt angle also alleviates the concentration of the stress applied to the porous membrane F, it is enabled to prevent the membrane F from breaking.

In addition, in a case of using the porous membrane cartridge 1 in filtration, because a liquid does not go around the side portion of the porous membrane F, mixing of impurities in a liquid after the filtration becomes less.

The first embodiment thus described is one example of the present invention, and because it suffices that the invention may fix the barrel 10 and the cap 20 in a state of crushing and sandwiching the porous membrane F, various variation examples as below can be considered. Meanwhile, in embodiments below with respect to a same portion as in the first embodiment, a detailed description thereof will be omitted, appending a same symbol.

### [Second Embodiment]

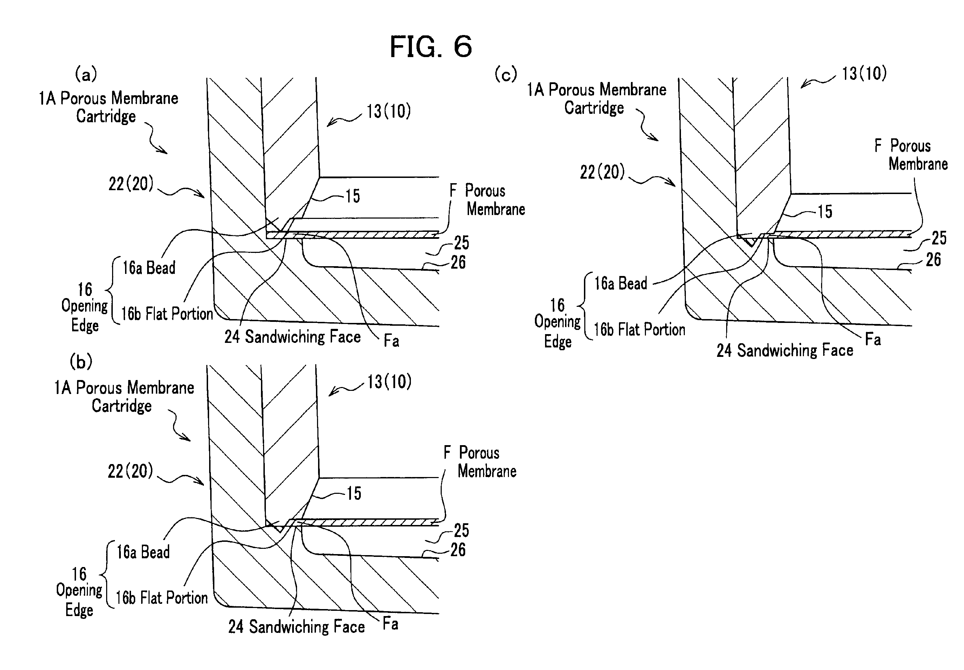

FIG. 6 is drawings showing a porous membrane cartridge 1A related to a second embodiment of the present invention, and is section views corresponding to the enlarged view of the part A in FIG. 2. As shown in FIG. 6 (a), in the porous membrane cartridge 1A of the second embodiment a bead 16a of which a section is chevron is provided across a whole perimeter in the vicinity of an outer perimeter of an opening edge 16 of the barrel 10. Then an inner perimeter side of the bead 16a is designed to be a flat portion 16b for orthogonalizing an axial line of the barrel 10.

In a case of assembling such the porous membrane cartridge 1A, disposing the porous membrane F at the bottom portion 26 of the cap 20 and fitting the top end 13 of the barrel 10 in the fit-in portion 22 of the cap 20, sandwich the membrane F between the opening edge 16 and the sandwiching face 24.

Then if applying an ultrasound to the barrel 10 by horn while pressing the opening edge 16 to the sandwiching face 24 in order to weld the cap 20 and the barrel 10 by ultrasonic welder, the bead 16a melts and penetrates the porous membrane F, and as shown in FIG. 6 (b), the sandwiching face 24 and the bead 16a are welded. If further making the welding proceed, the flat portion 16b crushes and sandwiches the porous membrane F between itself and the sandwiching face 24 as shown in FIG. 6 (c).

Also in the porous membrane cartridge 1A thus made, because the opening edge 16 and the sandwiching face 24 are welded while the peripheral edge Fa of the porous membrane F melts, a liquid does not go around a side portion of the porous membrane F. In addition, because the porous membrane F is sandwiched between the flat portion 16b and the sandwiching face 24 while crushed between them, a liquid does not enter the portion Fa of the membrane F.

Accordingly, also in the porous membrane cartridge 1A of the embodiment, a recovery efficiency of nucleic acids is better and mixing of impurities in a solution after a recovery is less.

In addition, in a case of using the porous membrane cartridge 1A in filtration, mixing of impurities in a liquid after the filtration becomes less.

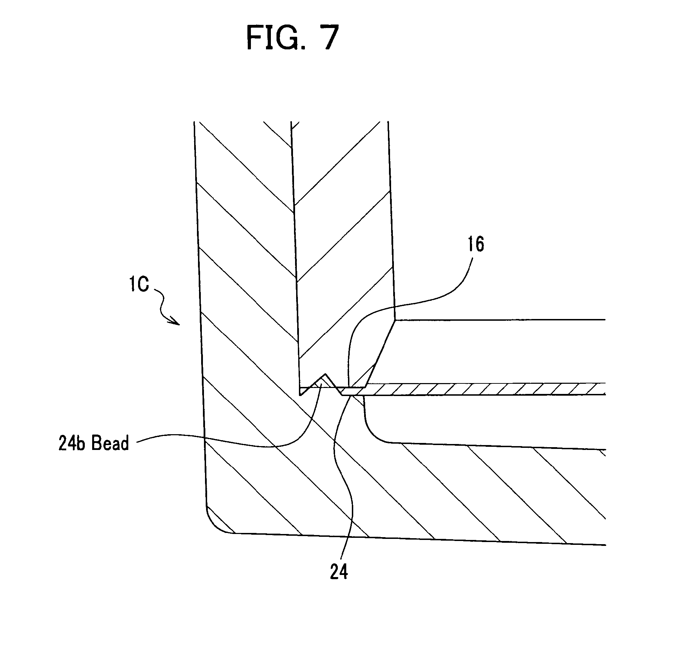

Meanwhile, in a case of providing such a bead are available not only a mode of providing the bead at the opening edge 16 of the barrel 10 but also a porous membrane cartridge 1C of a mode where a bead 24b of which a section is chevron across a whole perimeter in the vicinity of the outer perimeter of the sandwiching face 24 without providing the bead at the opening edge 16 as shown in FIG. 7.

### [Third Embodiment]

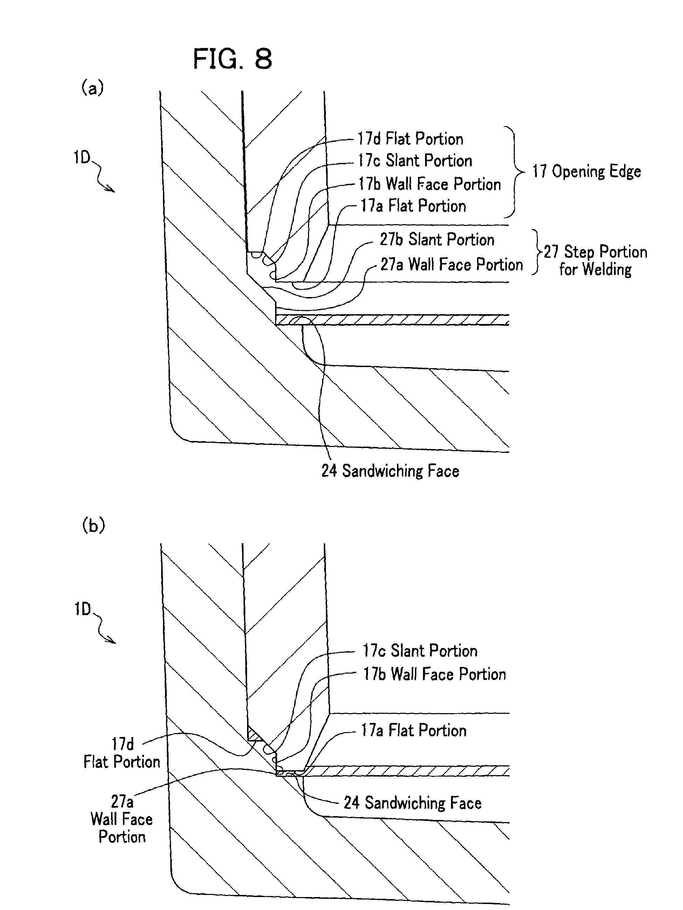

FIG. 8 is drawings showing a porous membrane cartridge 1D related to a third embodiment of the present invention and corresponding to the enlarged view of the part A in FIG. 2. The porous membrane cartridge 1D is a mode of welding the barrel 10 and the cap 20 at a portion of an outer perimeter more than the sandwiching face 24.

In other words, as shown in FIG. 8 (a), in the cap 20 is formed a step portion 27 for welding defined by: a wall face portion 27a perpendicularly rising up with respect to the sandwiching face 24 at outside of the sandwiching face 24; and a slant portion 27b slantedly rising up toward the inner perimeter of the fit-in portion 22 from an upper end (namely, the rear end) in FIG. 8 (a) of the wall face portion 27a.

On the other hand, at an opening edge 17 of the barrel 10 are formed a flat portion 17a parallel with the sandwiching face 24 formed at an inner perimeter side; a wall face portion 17b composed of a peripheral face for fitting in the wall face portion 27a formed with continuing from an outer perimeter end of the flat portion 17a; a slant portion 17c formed with continuing from the top end in FIG. 8 (a) of the wall face portion 27a and parallel with the slant portion 27b; and a flat portion 17d formed with continuing into the slant portion 17c and extending toward the outer perimeter of the barrel 10.

If such the porous membrane cartridge 1D sandwiches the porous membrane F between the sandwiching face 24 and the flat portion 17a, and the barrel 10 and the cap 20 is applied to an ultrasonic welder, the flat portion 17d abuts with the slant portion 27b and the abutment portion is welded. Then the peripheral edge Fa of the porous membrane F is sandwiched between the flat portion 17a and the sandwiching face 24 in a state of being crushed.

Thus only sandwiching and holding the porous membrane F and welding the barrel 10 and the cap 20 at an outer portion more than the membrane F, it does not occur to damage the membrane F also in a case that it is especially delicate.

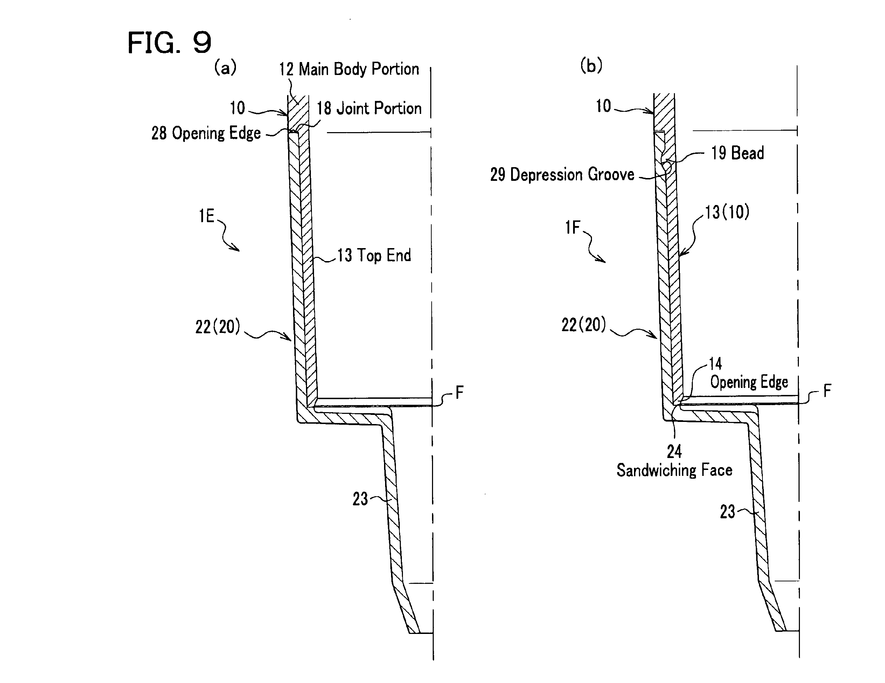

Furthermore, as a mode of fixing the barrel 10 and the cap 20 at outside of the porous membrane F are cited modes shown in FIG. 9.

For example, as shown in FIG. 9 (a), it is also enabled to make the main body 12 of the barrel 10 and a face of a step difference of an outer perimeter face of the top end 13 a joint portion 18 for welding, on the other hand to form a protrusion abutting with the portion 18 across a whole perimeter at an opening edge 28 at a rear end side of the cap 20, and to thus make a porous membrane cartridge 1E where the joint portion 18 and the opening edge 28 are welded.

In addition, as shown in FIG. 9 (b), form a bead 19 composed of a gentle circular section along a peripheral direction across a whole perimeter at an outer perimeter of the top end 13 of the barrel 10, and on the other hand, in advance form a corresponding depression groove 29 at a portion corresponding to the bead 19 on an inner perimeter face of the fit-in portion 22 of the cap 20. Then by an engagement between the bead 19 and the depression groove 29, it is enabled to sandwich the porous membrane F between the opening edge 14 and the sandwiching face 24 in a state of crushing the outer perimeter edge of the membrane F.

Because such a porous membrane cartridge 1F is enabled to be assembled by hand, it is convenient in small production.

Thus, although the embodiments of the present invention are described, the invention is not limited thereto, and it can be carried out with being appropriately varied.

For example, the barrel 10 and the cap 20 can also be made to adhere by any one of an adhesive and a UV curing resin, and the outer perimeter face of the top end 13 of the barrel 10 and the inner perimeter face of the fit-in portion 22 of the cap 20 can also be welded by laser. Meanwhile, in a case of laser welding, it is preferable to make the barrel 10 a material that can generate heat by absorbing laser or to blend a plasticizer in the barrel 10.

### EXAMPLE

Next will be described one example of the present invention.

In the example, manufacturing a porous membrane cartridge of a shape in the first embodiment and changing a welding condition at that time, a test for determining whether welding was good or bad was performed.

As a material of the barrel 10 and the cap 20 was used polystyrene (manufactured by A&M Styrene Co., Ltd.). The outer diameter of the opening edge 14 of the barrel 10 was made 7 mm, the width of the flat portion 14a at outer perimeter side of opening edge 14 was made 0.05 mm, and as shown in FIG. 5 (a), the angle of the taper portion 14b was formed to be 10 degrees for the flat portion 14a.

As the porous membrane F was used triacetylcellulose (Microfilter FM500 manufactured by Fuji Photo Film Co., Ltd.).

Using an ultrasonic welder (40 KHz, 800 KW) manufactured by Branson Corp. as an ultrasonic welder, disposing the porous membrane F at the bottom portion 26 of the cap 20 same as in the first embodiment, and fitting the top end 13 of the barrel 10 in the cap 20, the barrel 10 was vibrated while pressed toward the cap 20 by a horn of the ultrasonic welder. Changing a pressing force and a vibration time at this time, a welding result under each condition was determined.

Table 1 shows the result.

**[Table 1]**

| | | Pressing Force (N) | | | | |
|---|---|---|---|---|---|---|
| | | 50 | 75 | 100 | 150 | 200 |
| Vibration Time(sec) | 0.03 | × | × | × | × | × |
| | 0.05 | × | × | O | O | O |
| | 0.1 | × | × | O | O | O |
| | 0.15 | × | O | O | O | O |
| | 0.2 | Δ | O | O | O | O |
| | 0.25 | Δ | O | O | O | O |
| | 0.3 | Δ | O | O | O | □ |
| | 0.35 | Δ | O | O | O | □ |
| | 0.4 | Δ | O | O | □ | □ |
| | 0.45 | Δ | O | O | □ | □ |
| | 0.5 | Δ | □ | □ | □ | □ |
| | 0.6 | Δ | □ | □ | □ | □ |

| | |
|---|---|
| × | Unable to be Welded |
| Δ | Liquid Leakage |
| □ | Perforation of Porous Membrane and Deformation of Molded Product |
| ○ | Good |

As shown in Table 1 were changed the pressing force between 50 N and 200 N and the vibration time between 0.03 sec and 0.6 sec. In Table 1, the symbol × indicates that the barrel 10 and the cap 20 could not be welded; the symbol Δ indicates that although the barrel 10 and the cap 20 could be welded, the welding was insufficient and there was a liquid leakage from the welded portion; the symbol □ indicates that there was a defect that the porous membrane F was perforated or a formed product was deformed; and the symbol ○ indicates that the welding could be performed well without the defect.

As seen from Table 1, in a case of the pressing force of 50 N, the welding could not be performed or there was a liquid leakage, and any case of the vibration time was bad.

In a case of the pressing force of 75 N, the welding could not be performed in a case of the vibration time not more than 0.1 sec and could be performed well in a case of the vibration time between 0.15 sec and 0.45 sec; in a case of the vibration time not less than 0.5 sec, a welding time was too long and there was the defect in a formed product.

In a case of the pressing force of 100 N, the welding could not be performed in a case of the vibration time of 0.03 sec and could be performed well in a case of the vibration time between 0.05 sec and 0.45 sec; in a case of the vibration time not less than 0.5 sec, a welding time was too long and there was the defect in a formed product.

In a case of the pressing force of 150 N, the welding could not be performed in a case of the vibration time of 0.0 3sec and could be performed well in a case of the vibration time between 0.05 sec and 0.35 sec; in a case of the vibration time not less than 0.4 sec, a welding time was too long and there was the defect in a formed product.

In a case of the pressing force of 200 N, the welding could not be performed in a case of the vibration time of 0.03 sec and could be performed well in a case of the vibration time between 0.05 sec and 0.25 sec; in a case of the vibration time not less than 0.3sec, a welding time was too long and there was the defect in a formed product.

Thus in a case of the pressing force between 75 N and 200 N, good welding was enabled if between a predetermined vibration time, and as a result, it was enabled to manufacture a preferable porous membrane cartridge where a liquid leakage does not occur.

## Claims

1. A porous membrane cartridge comprising:
a cylindrical barrel having openings at a top end and a rear end, respectively;
a cap formed into a cylindrical shape having a fit-in portion fitted outside said top end, abutting with an opening edge of said top end, and having a sandwiching face for sandwiching a porous membrane between itself and said barrel; and
said porous membrane sandwiched between the opening edge of said barrel and said cap,
wherein said cap is fixed to said barrel so as not to be pulled out of the barrel in a state of crushing a peripheral edge of said porous membrane and sandwiching the porous membrane between itself and said cap.

2. The porous membrane cartridge according to claim 1, wherein the opening edge of said barrel and the sandwiching face of said cap are welded by ultrasound.

3. The porous membrane cartridge according to claim 2, wherein in addition that the opening edge of said barrel is formed to a taper where an inner perimeter side is more retreated than an outer perimeter side, said opening edge is welded to the sandwiching face of said cap.

4. The porous membrane cartridge according to claim 3, wherein said taper is formed with continuing into a flat portion formed at an outmost perimeter of said opening edge.

5. The porous membrane cartridge according to claim 2, wherein in addition that a bead portion as an energy director is circularly formed on any one of said opening edge and said sandwiching face, and said porous membrane is sandwiched and crushed with the bead portion, said cap and said barrel are welded by ultrasound

6. The porous membrane cartridge according to claim 1, wherein said barrel comprises a joint portion, which is configured to abutting with an opening edge of the fit-in portion of said cap, on an outer perimeter of the barrel, and said cap and said barrel are made to adhere or are welded by the opening edge of said fit-in portion and said joint portion.

7. The porous membrane cartridge according to claim 1, wherein said cap is fixed to said barrel by an engagement between any one of a depression and a protrusion formed on an outer perimeter face of said barrel and any one of a depression and a protrusion formed on an inner perimeter face of said cap.

8. The porous membrane cartridge according to claim 1, wherein said cap and said barrel are made to adhere by adhesive.

9. The porous membrane cartridge according to claim 1, wherein after said cap and said porous membrane are inserted in a cavity of an injection molding mold, a shape of a portion of said barrel is molded by injecting a molding material in said cavity.
